# FASCICULE DE BREVET EUROPEEN

(11) **EP 1 426 170 B1**
(45) Date de publication et mention de la délivrance du brevet: **22.03.2006**
(21) Numéro de dépôt: 03026368.5
(22) Date de dépôt: 18.11.2003
(51) Int. Cl.: B29D 30/16

(54) **Appareil de fabrication d'un renforcement pour pneumatique, à bras de pose multiples**
Vorrichtung mit mehreren Auftragungsarmen zur Herstellung eines Verstärkungselements für Luftreifen
Apparatus having multiple application arms for the manufacture of a reinforcing element for tyres

(30) Priorité: 04.12.2002 FR 0215307
(43) Date de publication de la demande: 09.06.2004
(73) Titulaire: Société de Technologie Michelin, 63000 Clermont-Ferrand (FR); MICHELIN RECHERCHE ET TECHNIQUE S.A., 1763 Granges-Paccot (CH)
(72) Inventeur: Delhours, André, 63200 Marsat (FR); Mayet, Jean-Claude, 63000 Clermont-Ferrand (FR)
(74) Mandataire: Bauvir, Jacques

(56) Documents cités:
- EP-A- 1 122 057
- US-A- 3 082 140

## Description

La présente invention concerne la fabrication des pneumatiques. Plus précisément, elle se rapporte à la mise en place de fils pour constituer un renforcement du pneumatique. Plus particulièrement, elle propose des moyens aptes notamment à fabriquer un tel renforcement sur une forme proche ou identique de la forme de la cavité interne du pneumatique, c'est à dire une forme sensiblement toroïdale, supportant l'ébauche de pneumatique pendant sa fabrication.

Dans ce domaine technique, on connaît déjà des procédés et appareils qui permettent d'intégrer la fabrication des renforcements de pneumatique à l'assemblage du pneumatique lui-même. Cela signifie que, plutôt que de recourir à des produits semi-finis, comme des nappes de renforcement, on réalise un ou des renforcements in situ, au moment où l'on fabrique le pneumatique, et à partir d'une bobine de fil. Parmi ces procédés et appareils, la solution décrite dans la demande de brevet EP 1 122 057 est bien adaptée pour la réalisation de renforcements de carcasse sur un noyau rigide dont la surface extérieure correspond sensiblement à la forme de la cavité interne du pneumatique final. On y voit un appareillage dans lequel le fil, destiné à constituer un renforcement de carcasse, est posé en arceaux contigus sur un noyau rigide, par un mécanisme présentant au moins deux bras arrangés en cascade, décrivant un mouvement de va-et-vient autour du noyau de façon à poser, progressivement et de façon contiguë, un arceau à chaque aller et un arceau à chaque retour, avec intervention de presseurs appropriés pour appliquer les extrémités desdits arceaux au fur et à mesure sur le noyau rigide. Le noyau a été revêtu préalablement de caoutchouc cru selon l'architecture du pneumatique à fabriquer, ce qui présente la propriété intéressante de permettre de coller suffisamment les arceaux et de les maintenir en place au moins pour les besoins de la fabrication.

La dépose des fils sur le noyau est d'autant plus précise que l'oeilleton au travers duquel passe le fil s'approche le plus près possible du noyau dans la zone correspondant au bourrelet du futur pneumatique. Dans certaines mises en oeuvre de cette invention, on est conduit à ajouter au moins un troisième bras pour mieux se rapprocher de la base du bourrelet. Le problème qui se pose est de commander le mouvement propre de ce bras d'extrémité. Différents moyens de commande du mouvement du bras d'extrémité sont possibles mais ils présentent cependant tous une certaine complexité et ils alourdissent la mécanique.

L'objectif de la présente invention est de proposer un appareillage simplifié permettant malgré tout de s'approcher des extrémités de la trajectoire.

L'invention propose un appareil de fabrication d'un renforcement pour pneumatique selon la revendication 1, ledit appareil étant destiné à fabriquer un renforcement constitué à partir d'un fil, ledit appareil comprenant un bâti et étant destiné à être utilisé en coopération avec une forme sensiblement toroïdale, montée sur le bâti de façon rotative autour d'un axe de rotation, sur laquelle on construit progressivement ledit renforcement en déposant des arceaux dudit fil selon une trajectoire souhaitée pour ledit fil à la surface de ladite forme, ledit appareil comprenant :
- un organe de dépose du fil dans lequel le fil peut coulisser,
- un mécanisme d'animation monté sur le bâti, pour transporter ledit organe de dépose selon un mouvement cyclique, en va-et-vient, l'amenant en cycles successifs au voisinage de chacune des extrémités souhaitées pour le fil dans ladite trajectoire, le mécanisme d'animation comportant au moins un bras principal et deux bras auxiliaires, à savoir un bras auxiliaire avant et un bras auxiliaire arrière, chacun des bras auxiliaires étant articulé sur un axe géométrique de rotation, les axes géométriques de rotation respectifs étant sensiblement parallèles entre eux et distants l'un de l'autre,
- des presseurs proches de chaque extrémité de ladite trajectoire, pour appliquer le fil sur la forme au moins auxdites extrémités,
   caractérisé en ce que
- le bras principal est monté sur l'un des bras auxiliaires par l'intermédiaire d'un axe de rotation parallèle auxdits axes géométriques de rotation formant une articulation entre le bras principal et le bras auxiliaire considéré, et est monté sur l'autre des bras auxiliaires par un suiveur de came coopérant avec une lumière.

Des modes préférentiels de réalisation de l'invention forment l'objet des revendications dépendantes.

Le lecteur est invité à consulter la demande de brevet EP 1 122 057 précitée car le procédé de fabrication d'un pneu mis en oeuvre dans la présente demande est identique à celui de ladite demande. L'appareil est destiné à être utilisé avec un système de motorisation commandant en synchronisme la rotation de la forme, le mécanisme d'animation et les presseurs. En outre, la présente invention utilise les presseurs décrits dans la demande de brevet EP 1 122 057 (ensemble comportant un marteau et une fourche), pour permettre la formation d'une boucle avec le fil de renforcement et pour appliquer ladite boucle contre le noyau.

Avant d'aborder en détails la description des nouveaux moyens d'animation de l'organe de dépose du fil, rappelons quelques points utiles.

Notons tout d'abord que, comme dans la demande de brevet EP 1 122 057 déjà citée, le terme "fil" doit bien entendu être compris dans un sens tout à fait général, englobant un monofilament, un multifilament, un assemblage comme par exemple un câble ou un retors, ou un petit nombre de câbles ou retors groupés, et ceci quelle que soit la nature du matériau, et que le "fil" soit pré revêtu de caoutchouc ou non. Dans le présent mémoire, on emploie le terme "arceau" pour désigner un tronçon de fil allant d'un point singulier à un autre dans l'armature de renforcement. L'ensemble de ces arceaux disposés sur tout le pourtour du pneumatique forme le renforcement proprement dit. Un arceau au sens défini ici peut faire partie d'une carcasse, ou d'un renforcement de sommet, ou de tout autre type de renforcement. Ces arceaux peuvent être individualisés par une coupe du fil en cours de pose, ou tous reliés entre eux dans le renforcement final, par exemple par des boucles.

Fondamentalement, l'invention traite de la dépose en continu d'un fil de renforcement, dans une configuration aussi proche que possible de la configuration dans le produit final. Le fil est délivré à la demande par un distributeur approprié comportant par exemple une bobine de fil et le cas échéant un dispositif de contrôle de la tension du fil extrait de la bobine. L'appareil de fabrication d'un renforcement à partir d'un seul fil coopère avec une forme (noyau rigide ou une membrane armée) sur laquelle on fabrique le pneumatique. Il importe peu que le renforcement soit fabriqué en plusieurs rotations successives de la forme par devant les organes de pose décrits, avec coupe du fil ou non entre deux rotations successives.

Lorsque l'on définit des positions, des directions ou des sens avec les mots "radialement, axialement, circonférentiellement", ou lorsque l'on parle de rayons, on prend pour repère le noyau sur lequel on fabrique le pneumatique, ou le pneumatique par lui-même, ce qui revient au même. L'axe géométrique de référence est l'axe de rotation de la forme.

Eu outre, les organes de pose du fil décrits ici permettent aussi de réaliser un renforcement, par exemple un renforcement de carcasse, dans lequel le pas de pose du fil est variable. On entend par "pas de pose" la distance résultant de la somme de l'écart entre deux fils adjacents et le diamètre du fil. Il est bien connu que pour un renforcement de carcasse, l'écart entre fils varie selon le rayon auquel on le mesure. Il ne s'agit pas de cette variation dont il est question ici, mais bien d'un pas variable à un rayon donné. Il suffit pour cela de, sans changer la cadence de travail de l'organe de dépose, faire varier selon toute loi appropriée la vitesse de rotation de la forme. On obtient ainsi un pneumatique dont les fils de renforcement de carcasse, par exemple pour une carcasse radiale, sont disposés selon un pas présentant une variation contrôlée pour une position radiale donnée.

Enfin, les bras multiples font décrire à l'organe de dépose du fil un mouvement sensiblement compris dans un plan -appelé dans la suite le plan de mouvement- perpendiculaire à l'axe géométrique de rotation du ou des bras. Dans certaines mises en oeuvre particulières de l'invention, tout comme dans la demande de brevet EP 1 122 057 précitée, ledit plan de mouvement est lui-même animé d'un mouvement ayant un rôle fonctionnel comme cela apparaîtra ci-dessous.

La suite de la description permet de bien faire comprendre tous les aspects de l'invention, en s'appuyant sur les figures suivantes :
La figure 1 est une perspective schématique montrant un premier mode de réalisation d'un appareil selon l'invention ;
La figure 2 représente les stades successifs du fonctionnement du premier mode de réalisation ;
La figure 3 est une perspective schématique montrant un deuxième mode de réalisation d'un appareil selon l'invention ;
La figure 4 représente les stades successifs du fonctionnement du deuxième mode de réalisation;
La figure 5 est une perspective schématique montrant un troisième mode de réalisation d'un appareil selon l'invention ;
La figure 6 est une perspective schématique montrant une variante de réalisation d'un appareil selon l'invention.

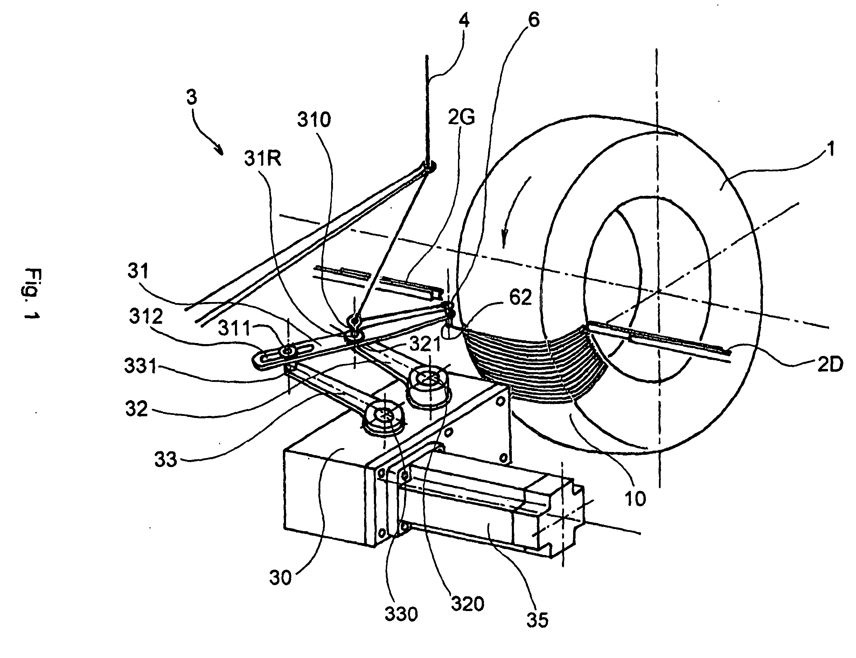

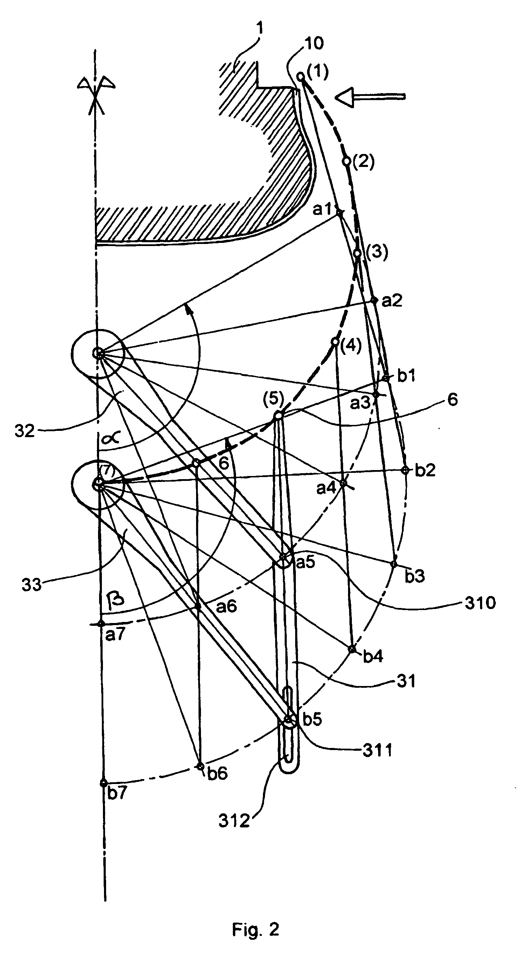

A la figure 1 (ainsi que d'ailleurs pour tous les exemples décrits, sans toutefois que ceci soit limitatif), la forme est un noyau 1 (rigide et démontable) définissant la géométrie de la surface intérieure du pneumatique. Celui-ci est revêtu de caoutchouc 10 (voir figure 2), par exemple d'une couche de gomme d'étanchéité à base de caoutchouc butyl, et d'une couche de gomme assurant l'ancrage des fils de carcasse sur le noyau pendant la fabrication, puis l'enrobage de ceux-ci dans le pneu vulcanisé. Le caoutchouc 10 recouvrant le noyau 1 permet de retenir un fil 4 sur le noyau 1 au fur et à mesure de sa dépose, par un effet de collage. Bien entendu, le noyau 1 est entraîné en rotation par tout dispositif convenable, non représenté.

La présente invention propose un mécanisme d'animation à bras multiples qui, par rapport à ce qui est décrit dans la demande de brevet EP 1 122 057, présente l'avantage de pouvoir approcher l'oeilleton très près du noyau sans recourir à trois bras en série, donc sans devoir commander le mouvement du troisième des bras en cascade arrangés en série.

A la figure 1, on voit un mécanisme d'animation 3 à bras multiples monté sur une platine 30. Le mécanisme d'animation 3 à bras multiples comprend un bras principal 31 à l'extrémité duquel est installé un oeilleton 6. Dans cet exemple, le bras principal 31 supporte directement l'organe de dépose. L'oeilleton 6 constitue dans tous les exemples décrits ici la matérialisation de l'organe de dépose du fil 4 (sans que ceci soit limitatif). Rappelons que le mécanisme d'animation 3 à bras multiples remplit la fonction remplie par le mécanisme à chaîne dans la demande de brevet EP 0 580 055, et que les dispositifs presseurs 2G et 2D sont positionnés de façon appropriée pour jouer le rôle décrit dans la demande de brevet EP 0 580 055.

L'oeilleton 6 est similaire à ce qui a déjà été décrit dans la demande de brevet EP 1 122 057. Son orifice de sortie 62 décrit un mouvement dans ledit plan de mouvement de l'organe de dépose. Il convient de soigner la réalisation des rebords de l'orifice 62 pour ne pas blesser le fil 4, car le brin de sortie de celui-ci se dispose généralement sensiblement dans le plan de mouvement, c'est à dire dans un plan qui est perpendiculaire aux parois de l'oeilleton 6. En variante, on peut orienter l'oeilleton de façon à se rapprocher de l'orientation moyenne du fil à la sortie de l'oeilleton.

Le bras principal 31 est monté sur la platine 30 au moyen d'un bras auxiliaire avant 32 et d'un bras auxiliaire arrière 33. Le bras auxiliaire avant 32 est monté sur un arbre 320 et le bras auxiliaire arrière 33 est monté sur un arbre 330. Le centre géométrique de rotation 31R du bras principal 31 est situé à l'extrémité 321 du bras auxiliaire avant 32 : le bras principal 31 est monté sur le bras auxiliaire avant 32 au moyen d'un axe 310 disposé au centre géométrique de rotation 31R, formant articulation entre le bras principal 31 et le bras auxiliaire avant 32. L'axe 310 est par ailleurs monté dans la partie centrale du bras principal 31. Une lumière 312 est aménagée sur le bras principal 31. Ladite lumière 312 est située du côté du centre géométrique de rotation 31 R qui est opposé à l'oeilleton 6. Un téton 311 est monté à l'extrémité 331 du bras auxiliaire arrière 33. Le téton 311 traverse la lumière 312 du bras principal 31 afin de pouvoir guider le bras principal 31.

Dans la disposition décrite dans la demande de brevet EP 1 122 057, le mécanisme d'animation à bras arrangés en cascade formait un parallélogramme (arbres 31. 32 et 34), les arbres 31 et 34 étaient d'égale longueur et avaient des mouvements nécessairement identiques ; quant au bras 32 porté par les bras 31 et 34, il décrivait un mouvement tout en restant toujours parallèle à lui-même (toutes les références soulignées et citées en début de ce paragraphe renvoient à la demande de brevet EP 1 122 057). Tout au contraire, dans la présente invention, grâce à l'installation d'une fonction de came et suiveur de came matérialisée par la lumière 312 creusée à une extrémité du bras principal 31 et le téton 311, le bras auxiliaire avant 32 et le bras auxiliaire arrière 33 peuvent être de longueurs différentes (on vise ici la longueur fonctionnelle mesurée entre le centre de rotation du bras auxiliaire considéré et le téton 311 ou l'axe 310), et/ou les bras auxiliaires avant 32 et arrière 33 peuvent avoir des mouvements d'oscillation d'ampleurs différentes. Fonctionnellement, l'invention permet de faire en sorte que, au cours de son mouvement, le bras principal 31 ne reste pas parallèle à lui-même. Il peut prendre une certaine inclinaison comme montré notamment à la figure 2, ce qui permet de rapprocher l'oeilleton 6 du bourrelet du futur pneumatique, même dans le cas où la forme de fabrication est plus étroite à hauteur du bourrelet que à mi flanc.

Le choix du degré d'inclinaison, c'est à dire de rapprochement du la zone du futur bourrelet, est obtenu en jouant sur les longueurs respectives des bras auxiliaires et/ou sur les amplitudes respectives des mouvements oscillatoires des bras auxiliaires. Aux figures 1 et 2, l'illustration montre une solution où les arbres auxiliaires 32 et 33 ont des mouvements légèrement différents. Lesdits bras auxiliaires n'effectuent pas de rotation continue, mais oscillent dans les limites d'un arc inférieur à 360°, la valeur précise dépendant de la constitution exacte du mécanisme d'animation à bras multiples 3 et de l'application visée. Les arbres 320 et 330 sont liés entre eux par un mécanisme interne à la platine 30 et réalisé de telle sorte que l'arbre 320 peut osciller selon une amplitude par exemple d'environ 240° alors que l'arbre 330 peut osciller selon une amplitude par exemple d'environ 220°. Les deux arbres sont commandés par un même moteur 35.

En variante, on pourrait commander les arbres 320 et 330 chacun par son propre moteur électrique et piloter les deux moteurs électriques chacun de façon appropriée pour réaliser des mouvements synchrones, mais d'amplitudes relatives éventuellement légèrement différentes.

La figure 2 représente de façon schématique les mouvements du mécanisme d'animation 3 à bras multiples. On voit le bras principal 31, le bras auxiliaire avant 32 et le bras auxiliaire arrière 33. La courbe en traits interrompus épais portant les repères (1), (2), (3), (4), (5), (6) et (7) représente le mouvement de l'oeilleton 6. La courbe en traits d'axe portant les repères a1, a2, a3, a4, a5, a6 et a7 représente le mouvement dans l'espace de l'axe 310, c'est-à-dire aussi le mouvement dans l'espace du centre de rotation 31R du bras principal 31. Enfin, la courbe portant les repères b1, b2, b3, b4, b5, b6 et b7 représente le mouvement dans l'espace du téton 311. On voit bien à la figure 2 que les bras auxiliaire avant 32 et auxiliaire arrière 33 sont d'égale longueur (c'est seulement un cas particulier, ce n'est pas obligatoire). Comme l'amplitude de leur mouvement n'est pas identique, cela va provoquer une inclinaison variable du bras principal 31.

Le mécanisme est monté de telle façon qu'il existe une configuration dans laquelle les bras auxiliaires sont alignés exactement sur l'axe de symétrie de la figure. Si l'axe 310 est au point a7 et le téton 311 est au point b7 (ce n'est pas la position représenté à la figure 2), alors le bras principal 31 sera disposé exactement sur l'axe de symétrie de la figure, et exactement aligné avec les bras auxiliaires avant 32 et arrière 33. Puisque l'amplitude du mouvement du bras auxiliaire arrière est légèrement inférieure à l'amplitude du mouvement du bras auxiliaire avant, au fur et à mesure que les bras auxiliaires avant 32 et arrière 33 tournent, à partir de leur position dans laquelle ils étaient confondus avec l'axe de symétrie de la figure, pour rejoindre la position extrême de leur mouvement d'oscillation, dans un premier temps, le bras principal 31 va s'incliner par rapport à l'axe de symétrie de la figure de telle façon que l'oeilleton 6 s'écarte par rapport à l'axe de symétrie de la figure légèrement plus que l'axe 310 et plus encore que l'endroit de la lumière 312 où se trouve le téton 311.

Puis il existe une position intermédiaire des bras auxiliaires avant 32 et arrière 33 pour laquelle le bras principal 31 est à nouveau exactement parallèle à l'axe de la figure. Enfin, lorsque les bras auxiliaires avant 32 et arrière 33 se rapprochent de la limite d'oscillation, le bras principal 31 s'incline de telle façon que l'oeilleton 6 est plus proche de l'axe de la figure que l'axe 310 et plus proche encore que le téton 311. En choisissant correctement les amplitudes relatives des mouvements des bras auxiliaires avant 32 et arrière 33, on peut faire en sorte que l'oeilleton 6 se dispose à un endroit extrêmement proche du bourrelet du futur pneumatique.

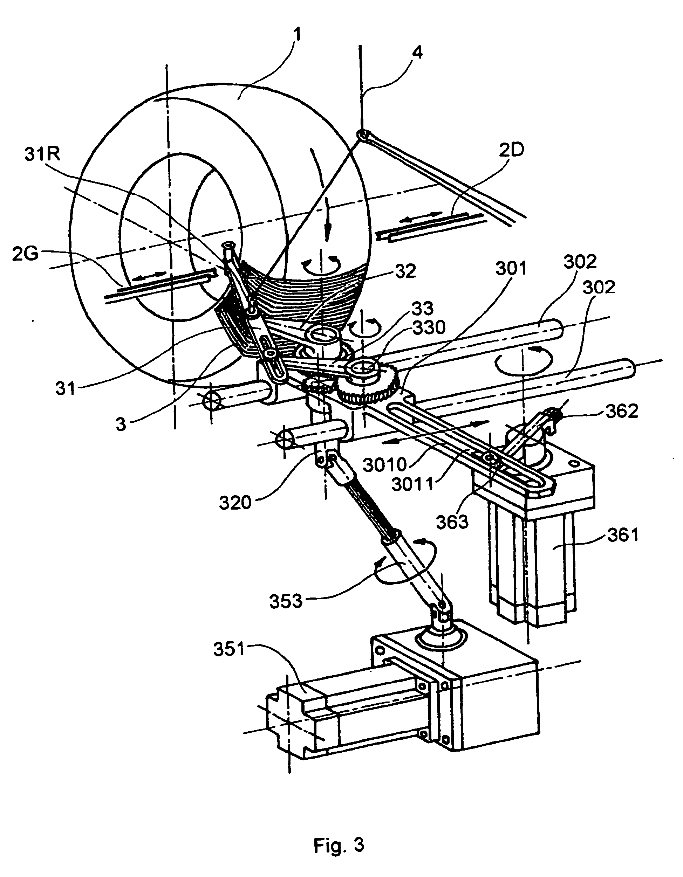

A la figure 3, on voit une platine 301 qui constitue un support portant un mécanisme d'animation 3 à bras multiples en tous points identique à ce qui a été décrit ci-dessus. Ce mécanisme d'animation 3 comporte notamment le bras principal 31 et les bras auxiliaires avant 32 et 33. La spécificité de ce mode de réalisation est que la platine 301 est montée coulissante sur deux barreaux parallèles 302. La platine 301 comporte une patte 3010 à l'intérieur de laquelle est creusée une lumière 3011. La platine 301 peut effectuer un mouvement de translation alternative, guidé par les barreaux 302, grâce à un moteur 361 commandant un levier 362. A l'extrémité du levier 362 est installé un téton 363 qui est engagé dans la lumière 3011. Le mouvement du mécanisme d'animation 3 à bras multiples est commandé par un moteur 351 qui entraîne l'arbre 320 par l'intermédiaire d'un arbre télescopique 353. L'arbre 330 est entraîné par l'arbre 320 via un engrenage. L'intérêt de ce mode de réalisation est de conférer au mécanisme d'animation 3 à bras multiples un degré de liberté de mouvement supplémentaire par la translation de la platine 301 qui le supporte, utile notamment pour augmenter la capacité de pose en largeur parallèlement à l'axe de rotation du noyau 1.

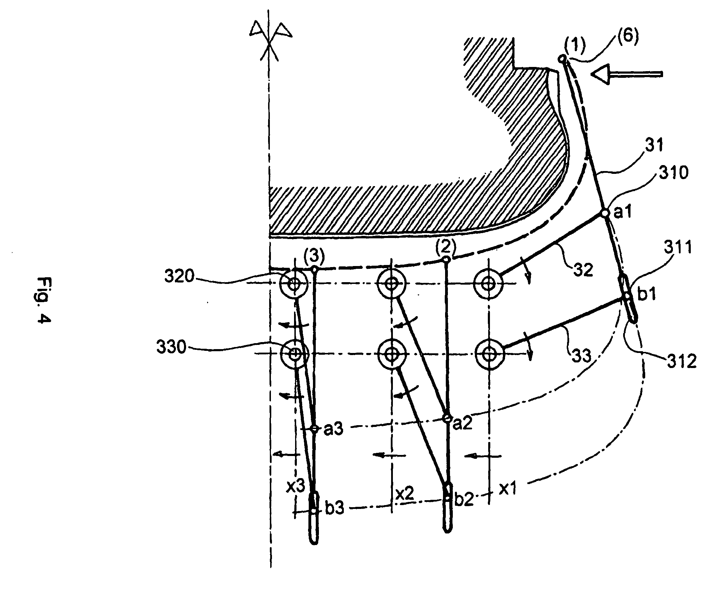

Le mouvement de translation de la platine 301, combiné au mouvement déjà vu du mécanisme d'animation 3 à bras multiples est illustré à la figure 4. On voit les positions respectives x1, x2 et x3 qui sont la trace d'un plan imaginaire reliant les axes géométriques des arbres 320 et 330. Le déplacement de la platine 301 provoque le déplacement des arbres 320 et 330, donc le déplacement des centres de rotation des arbres auxiliaires avant 32 et arrière 33. En superposant ce déplacement transversal au mouvement propre du mécanisme d'animation 3 à bras multiples expliqué à l'aide de la figure 2, on obtient les mouvements globaux suivants : la courbe en traits interrompus épais portant les repères (1), (2) et (3) représente le mouvement de l'oeilleton 6 ; la courbe en traits d'axe portant les repères a1, a2 et a3 représente le mouvement dans l'espace de l'axe 310, c'est-à-dire aussi le mouvement dans l'espace du centre de rotation 31R du bras principal 31 ; enfin, la courbe portant les repères b1, b2 et b3 représente le mouvement dans l'espace du téton 311.

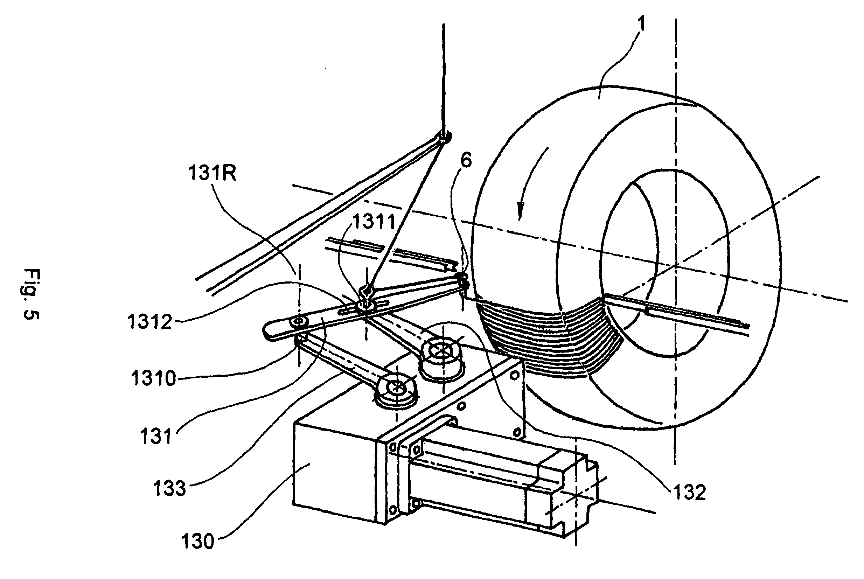

En variante de réalisation également, on pourrait installer la lumière dans la partie médiane de l'arbre principal et le centre de rotation de celui-ci à son extrémité opposée à l'oeilleton 6. C'est ce qui est illustré à la figure 5. Dans cette variante, on voit un bras principal 131 monté sur une platine 130 au moyen d'un bras auxiliaire avant 132 et d'un bras auxiliaire arrière 133. Une caractéristique spécifique de cette variante est que le centre géométrique de rotation 131R du bras principal 131 est situé à l'extrémité du bras auxiliaire arrière 133 : le bras principal 131 est monté sur le bras auxiliaire arrière 133 au moyen d'un axe 1310 disposé au centre géométrique de rotation 131R, formant articulation entre le bras principal 131 et le bras auxiliaire arrière 133. L'axe 1310 est par ailleurs monté dans la partie d'extrémité arrière du bras principal 131. Une lumière 1312 est aménagée en partie centrale du bras principal 131. Ladite lumière 1312 est située entre le centre géométrique de rotation 131R et l'oeilleton 6. Un téton 1311 est monté à l'extrémité du bras auxiliaire avant 132. Le téton 1311 traverse la lumière 1312 du bras principal 131 afin de pouvoir guider le bras principal 131.

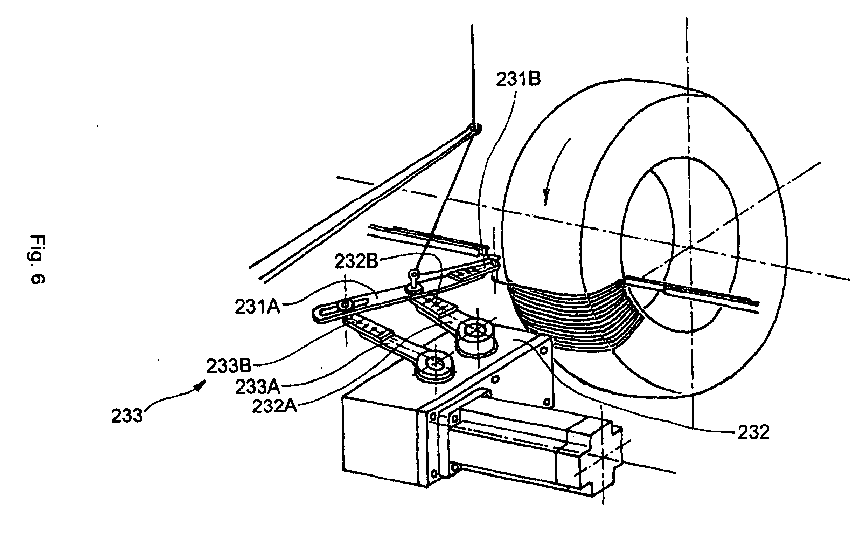

A la figure 6, apparaissent des possibilités réglage utilisables avec toutes les variantes décrites ci-dessus. On voit que la longueur fonctionnelle de chacun des bras auxiliaires avant 232 et arrière 233 est réglable, parce que chacun des bras auxiliaire est lui même réalisé en deux parties. La partie d'extrémité 232B peut être ajustée en différents positions sur la base 232A du bras auxiliaire avant 232, et de même pour le bras auxiliaire arrière 233. De même, l'axe 1310 peut être installé sur le bras principal 131 à différents endroits. Enfin, l'oeilleton 6 la longueur fonctionnelle utile du bras principal 131 peut être réglée par positionnement de la partie d'extrémité 231B à différents endroits sur la base 231A du bras principal 231. Ces moyens de réglage peuvent être utilisés indépendamment ou concomitamment avec le réglage d'amplitudes de mouvement différentes pour les bras auxiliaires ou même de mouvements desdits bras commandés par des moteurs différents pour offrir plus de souplesse encore.

En résumé, le mécanisme d'animation du moyen de dépose du fil est de préférence tel que les mouvements des bras auxiliaires, synchrones, peuvent être ajustés selon des amplitudes différentes. Sous un autre aspect, cumulable avec le précédent, le mécanisme d'animation du moyen de dépose du fil est de préférence tel que le mouvement des bras auxiliaires, synchrone, est commandé par des moteurs différents.

L'ensemble du mécanisme d'animation à bras multiples 3 est assez compact. L'ensemble des organes de pose, à savoir le mécanisme d'animation à bras multiples 3 et les dispositifs presseurs 2, y compris le moteur et le mécanisme d'entraînement, forment un sous-ensemble pouvant facilement être présenté au noyau de façon appropriée, et pouvant être escamoté pour par exemple présenter au noyau d'autres dispositifs utilisés pour la fabrication d'un pneumatique ou pour l'évacuation du noyau vers d'autres postes de confection d'un pneumatique.

On voit aux exemples que le bras principal 31 peut contourner le flanc de la forme de fabrication du futur pneu, pour présenter l'oeilleton 6 très près du bourrelet, grâce à l'inclinaison du bras principal 31 expliquée ci-dessus. Bien entendu et bien que cela semble une perspective moins utile, selon les choix constructifs précis des diverses réalisations concrètes de l'invention, l'inclinaison du bras principal 31 en fin de course pourrait être inverse.

## Revendications

1. Appareil de fabrication d'un renforcement pour pneumatique, ledit appareil étant destiné à fabriquer un renforcement constitué à partir d'un fil (4), ledit appareil comprenant un bâti et étant destiné à être utilisé en coopération avec une forme sensiblement toroïdale, montée sur le bâti de façon rotative autour d'un axe de rotation, sur laquelle on construit progressivement ledit renforcement en déposant des arceaux dudit fil selon une trajectoire souhaitée pour ledit fil à la surface de ladite forme, ledit appareil comprenant :
• un organe de dépose du fil dans lequel le fil peut coulisser,
• un mécanisme d'animation monté sur le bâti, pour transporter ledit organe de dépose selon un mouvement cyclique, en va-et-vient, l'amenant en cycles successifs au voisinage de chacune des extrémités souhaitées pour le fil dans ladite trajectoire, le mécanisme d'animation comportant au moins un bras principal (31) et deux bras auxiliaires, à savoir un bras auxiliaire avant (32) et un bras auxiliaire arrière (33), chacun des bras auxiliaires étant articulé sur un axe géométrique de rotation, les axes géométriques de rotation respectifs étant sensiblement parallèles entre eux et distants l'un de l'autre,
• des presseurs (2G et 2D) proches de chaque extrémité de ladite trajectoire, pour appliquer le fil sur la forme au moins auxdites extrémités,
**caractérisé en ce que**
• le bras principal est monté sur l'un des bras auxiliaires par l'intermédiaire d'un axe de rotation parallèle auxdits axes géométriques de rotation formant une articulation entre le bras principal (31) et le bras auxiliaire considéré, et est monté sur l'autre des bras auxiliaires par un suiveur de came coopérant avec une lumière (312).

2. Appareil selon la revendication 1, dans lequel le mécanisme d'animation est tel que le mouvement des bras auxiliaires, synchrone, peut être ajusté selon des amplitudes différentes.

3. Appareil selon la revendication 1, dans lequel le mécanisme d'animation est tel que le mouvement des bras auxiliaires, synchrone, est commandé par des moteurs différents.

4. Appareil selon la revendication 1, dans lequel la lumière est aménagée sur le bras principal (31).

5. Appareil selon la revendication 4, dans lequel la lumière (312) est située du côté de l'articulation opposé à l'organe de dépose.

6. Appareil selon l'une des revendications 1 à 5, dans lequel le bras principal (31) supporte directement l'organe de dépose.

7. Appareil selon l'une des revendications 1 à 6, dans lequel l'organe de dépose est un oeilleton (6).

8. Appareil selon l'une des revendications 1 à 7, utilisé avec un système de motorisation commandant en synchronisme la rotation de la forme, le mécanisme d'animation et les presseurs, dans lequel le mécanisme d'animation est monté sur un support lui-même en mouvement par rapport à l'axe de rotation de la forme, ce mouvement étant lui-même commandé en synchronisme avec la rotation de la forme par le système de motorisation.

9. Appareil selon la revendication 8, dans lequel le support est mu parallèlement à l'axe de la forme.

## Patentansprüche

1. Vorrichtung zur Herstellung eines Verstärkungselementes für Luftreifen, wobei die Vorrichtung dazu bestimmt ist, ein Verstärkungselement herzustellen, das von einem Draht (4) ausgehend gebildet wird, wobei die Vorrichtung ein Gestell umfasst und dazu bestimmt ist, in Zusammenwirken mit einer im Wesentlichen ringförmigen Form, die auf dem Gestell in drehender Weise um eine Rotationsachse herum befestigt ist, verwendet zu werden, auf welcher nach und nach das Verstärkungselement geschaffen wird, indem Bögen des Drahts gemäß einer gewünschten Bahn für den Draht auf die Oberfläche der Form aufgetragen werden, wobei die Vorrichtung Folgendes umfasst:
• ein Element zum Auftragen des Drahts, in dem der Draht gleiten kann;
• einen Animationsmechanismus, der auf dem Gestell befestigt ist, um das Element zum Auftragen gemäß einer zyklischen Hin- und Herbewegung zu befördern, das Zuführen in aufeinanderfolgenden Zyklen zur Nähe von jedem der Enden, die für den Draht in der Bahn gewünscht werden, wobei der Animationsmechanismus wenigstens einen Hauptarm (31) und zwei Hilfsarme umfasst, nämlich einen vorderen Hilfsarm (32) und einen hinteren Hilfsarm (33), wobei jeder der Hilfsarme auf einer geometrischen Rotationsachse gelenkig angebracht ist, wobei die jeweiligen geometrischen Rotationsachsen im Wesentlichen zueinander parallel verlaufen und voneinander beabstandet sind,
• Pressvorrichtungen (2G und 2D), die jedem Ende der Bahn nahe sind, um den Draht auf der Form wenigstens auf die Enden aufzutragen,
**dadurch gekennzeichnet, dass**
• der Hauptarm auf einem der Hilfsarme mittels einer Rotationsachse befestigt ist, die zu den geometrischen Rotationsachsen parallel verläuft, wodurch ein Gelenk zwischen dem Hauptarm (31) und dem betreffenden Hilfsarm gebildet wird, und auf dem anderen der Hilfsarme durch einen Nockenverfolger befestigt ist, der mit einem Schlitz (312) zusammenwirkt.

2. Vorrichtung nach Anspruch 1, wobei der Animationsmechanismus derart ist, dass die synchrone Bewegung der Hilfsarme gemäß den unterschiedlichen Amplituden eingestellt werden kann.

3. Vorrichtung nach Anspruch 1, wobei der Animationsmechanismus derart ist, dass die synchrone Bewegung der Hilfsarme durch unterschiedliche Motoren gesteuert wird.

4. Vorrichtung nach Anspruch 1, wobei der Schlitz auf dem Hauptarm (31) ausgebildet ist.

5. Vorrichtung nach Anspruch 4, wobei der Schlitz (312) auf der Seite des Gelenks angeordnet ist, die dem Auftragungselement gegenüber liegt.

6. Vorrichtung nach einem der Ansprüche 1 bis 5, wobei der Hauptarm (31) direkt das Auftragungselement trägt.

7. Vorrichtung nach einem der Ansprüche 1 bis 6, wobei das Auftragungselement eine Öse (6) ist.

8. Vorrichtung nach einem der Ansprüche 1 bis 7, die mit einem Motorisierungssystem verwendet wird, welches die Rotation der Form, den Animationsmechanismus und die Pressvorrichtungen synchron steuert, wobei der Animationsmechanismus auf einem Träger befestigt ist, der sich selbst in Bezug auf die Rotationsachse der Form in Bewegung befindet, wobei die Bewegung selbst synchron mit der Rotation der Form durch das Motorisierungssystem gesteuert wird.

9. Vorrichtung nach Anspruch 8, wobei der Träger parallel zur Achse der Form bewegt wird.

## Claims

1. Device for the fabrication of a tyre reinforcement, the said device being designed to fabricate a reinforcement made from a cord (4), the said device comprising a frame and being designed for use in cooperation with an essentially toroidal mould which is mounted on the frame and able to rotate about a rotation axis and on which the said reinforcement is progressively built up by laying arcs of the said cord along a trajectory desired for the said cord on the surface of the said mould, the said device comprising:
• a cord laying element through which the cord can slide,
• an actuation mechanism mounted on the frame, to transport the said cord laying element in a cyclic, back and forth movement, bringing it in successive cycles close to each of the ends desired for the cord in the said trajectory, the actuation mechanism comprising at least one main arm (31) and two auxiliary arms, namely a front auxiliary arm (32) and a rear auxiliary arm (33), each auxiliary arm being articulated on a geometrical rotation axis, the respective geometrical rotation axes being essentially parallel to one another and a distance apart,
• pressing elements (2G and 2D) near each end of the said trajectory, to apply the cord onto the mould at least at the said ends,
**characterised in that**
• the main arm is mounted on one of the auxiliary arms via a rotation axis parallel to the said geometrical rotation axes forming an articulation between the main arm (31) and the auxiliary arm considered, and is mounted on the other auxiliary arm by means of a cam follower which cooperates with an orifice (312).

2. Device according to Claim 1, in which the actuation mechanism is such that the movement of the auxiliary arms is synchronous and can be adjusted to different amplitudes.

3. Device according to Claim 1, in which the actuation mechanism is such that the movement of the auxiliary arms is synchronous and is controlled by different motors.

4. Device according to Claim 1, in which the slot is formed in the main arm (31).

5. Device according to Claim 4, in which the slot (312) is located on the side of the articulation opposite to the cord laying element.

6. Device according to any of Claims 1 to 5, in which the main arm (31) directly supports the cord laying element.

7. Device according to any of Claims 1 to 6, in which the cord laying element is an eyelet (6).

8. Device according to any of Claims 1 to 7, used with a motorisation system which controls the rotation of the mould, the actuation mechanism and the pressing elements in sychronisation, in which the actuation mechanism is mounted on a support which itself moves relative to the rotation axis of the mould, this movement itself being controlled in synchronisation with the rotation of the mould by the motorisation system.

9. Device according to Claim 8, in which the support is moved parallel to the axis of the mould.
